Europäisches Patentamt

European Patent Office

Office européen des brevets

(19)

(11) **EP 0 889 348 A1**

## (12) DEMANDE DE BREVET EUROPEEN

(43) Date de publication:
**07.01.1999 Bulletin 1999/01**

(51) Int. Cl.⁶: **G02C 7/04**

(21) Numéro de dépôt: **97810438.8**

(22) Date de dépôt: **03.07.1997**

(84) Etats contractants désignés:
**AT BE CH DE DK ES FI FR GB GR IE IT LI LU MC NL PT SE**

(71) Demandeur: **Muller, Gérard**
**1814 La Tour de Peilz (CH)**

(72) Inventeur: **Muller, Gérard**
**1814 La Tour de Peilz (CH)**

(74) Mandataire:
**AMMANN PATENTANWAELTE AG BERN**
**Schwarztorstrasse 31**
**3001 Bern (CH)**

(54) **Procédé de fabrication d'une lentille de contact à correct**

(57)     L'invention porte sur un procédé de fabrication d'une lentille de contact à correction axée comportant au moins une bosse de stabilisation façonnée à partir, d'une part, d'un jeu (b) de grandeurs dont chacune est définie par au moins un paramètre se référant à une base (8B) de la bosse et à une surface de coupe (B), cette surface (B) passant par la ligne de crête (B-B) de la bosse et étant perpendiculaire à la surface externe (8S) de la lentille et, d'autre part, soit d'un jeu (a) de grandeurs dont chacune est définie par au moins un paramètre se référant à une base (8A) de la bosse et à un plan de coupe (A), ce plan passant par le centre (C1) de la lentille et le centre (C2, C3) de la bosse et étant perpendiculaire à un plan (P) déterminé par le contour (PL) de la lentille, soit d'une courbe quelconque prédéfinie dans ledit plan (A). Chacun des jeux (a, b) comprend essentiellement trois grandeurs, les pentes, le sommet et la position de la bosse (radiale pour le jeu (a), axiale pour le jeu (b)).

L'invention permet une fabrication rationnelle de lentilles à correction axée pourvue d'au moins une bosse de stabilisation et une adaptation optimale des lentilles de ce type à l'oeil du porteur.

Fig. 2

EP 0 889 348 A1

## Description

La présente invention se réfère à un procédé de fabrication de lentilles de contact à correction axée présentant au moins une bosse de stabilisation, telles les lentilles toriques, et à des lentilles de contact de ce genre produites selon ce procédé.

De telles lentilles de contact comprennent en général deux bosses de stabilisation et sont connues à travers EP-B-0 042 023. Toutefois, si ce brevet divulgue le principe de stabilisation d'une lentille de contact torique, il ne décrit pas en détail la géométrie du bossage, se limitant à dire que la forme de celui-ci peut être circulaire, en coussinet ou présenter toute autre forme.

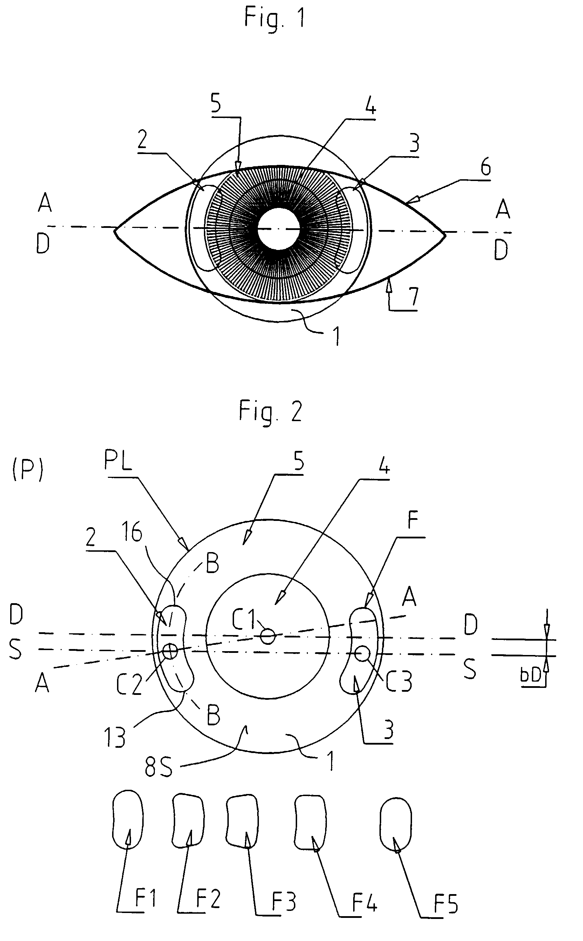

Une fois la lentille de contact mise sur la cornée de l'oeil, les bosses prendront place entre les paupières et stabiliseront ainsi la lentille (voir figure 1). Mais cette fonction de stabilisation ne doit pas nuire, bien sûr, au confort du port de la lentille. Ainsi, il est nécessaire de choisir la taille d'une bosse de telle façon qu'elle ne soit ni trop longue, pour ne pas être recouverte par la paupière supérieure, ni trop courte, pour éviter qu'un "jeu" entre ladite bosse et la paupière supérieure ne subsiste, puisqu'un tel jeu permettrait à la lentille d'osciller de part et d'autre dudit axe de stabilisation, et engendrerait donc concomitamment un défaut de stabilisation et un désagrément pour le porteur, inconvénients qu'il convient d'écarter. De manière analogue, le choix de la hauteur de la bosse doit viser à concilier les mêmes impératifs, puisque si l'efficacité de la bosse augmente avec la hauteur, la gêne pour le porteur risque d'augmenter elle aussi.

Cette approche d'ordre général exposée, on sait qu'une bosse peut être définie par ses dimensions et sa forme selon des procédés multiples, si bien qu'il existe une quasi-infinité de paramètres et valeurs possibles pour la caractériser. Mais l'on conçoit aisément que cela va à l'encontre d'une production rationnelle de lentilles de contact à correction axée pourvues de bosses de stabilisation.

Or, l'homme du métier est animé par un double souci: d'une part, il souhaite, comme on vient de le voir plus haut, réaliser des lentilles de contact à correction axée efficaces et qui puissent procurer un maximum de confort au porteur, mais il aspire aussi, d'autre part, à ce que la fabrication de ces lentilles soit optimale aussi bien sur le plan technique qu'économique. Le dénominateur commun de ce double problème auquel l'homme du métier est confronté réside dans la question de savoir comment, avec et selon quelles données réaliser le bossage.

De ce fait et partant de l'état de la technique évoqué plus haut, l'objet de la présente invention est de proposer un procédé de fabrication de lentilles de contact à correction axée se basant sur la détermination de la géométrie d'une bosse de stabilisation consistant à sélectionner des grandeurs caractéristiques choisies du bossage, et des paramètres les définissant, une sélection et un choix judicieux de ces données permettant d'apporter une réponse efficace à la question précitée.

Cet objectif est atteint grâce au procédé défini dans les revendications indépendantes.

Le procédé permet dès lors de façonner le bossage par application de la géométrie ainsi déterminée, par exemple par usinage sur un tour (sans exclusion de tous autres moyens possibles de fabrication) et de préférence selon un système d'oscillation du burin ou de la broche. Bien entendu, on mettra avantageusement en oeuvre des moyens informatiques. Plus particulièrement, le dispositif pour la fabrication de lentilles de contact décrit dans la demande EP-96810060.2, commandé par un système informatique, trouvera un champ d'application privilégié dans ce procédé.

Les autres revendications décrivent des moyens de mise en oeuvre de ce procédé pour réaliser, à bon compte et avantageusement, une lentille à correction axée comportant au moins une bosse de stabilisation.

L'invention sera décrite en détail en se référant au dessin ci-annexé présentant des schémas pour définir le procédé et la lentille selon l'invention.

La figure 1      représente schématiquement une lentille placée au contact de la cornée de l'oeil,

la figure 2      représente une vue en élévation schématique d'une lentille de contact,

la figure 3      montre une coupe selon un plan (A) représenté par sa trace A-A dans la figure 2, et

la figure 4      montre une coupe selon une surface (B) représentée par ses traces B-B et B'-B' respectivement dans les figures 2 et 3.

La figure 1 montre schématiquement une lentille de contact 1 posée sur la cornée (non référencée) d'un oeil, présentant deux bosses 2 et 3 situées dans une zone périphérique 5 entourant une zone optique 4, la paupière supérieure 6, la paupière inférieure 7 et l'iris (non référencé) de cet oeil.

On aperçoit à la figure 2 que les bosses sont placées sur un axe S-S, que l'homme de l'art dénomme axe de stabilisation dynamique (ci-après axe de stabilisation) passant par des centres C2, C3 (symbolisés par un petit cercle et sur la définition desquels on reviendra plus loin) des bosses 2, 3. Selon l'exemple représenté sur cette figure, les bosses 2, 3 sont décalées vers le bas, c'est-à-dire que ledit axe de stabilisation S-S, et une droite D-D qui lui est parallèle et qui passe par le centre C1 (symbolisé par un petit cercle) de la lentille, sont séparés d'une distance bD. On comprend que les bosses 2, 3, ne doivent pas nécessairement se trouver sur le diamètre D-D, comme cela est représenté, à titre d'exemple particulier, à la figure 1 (pour raison de simplicité, la même référence 1 a été affectée aux lentilles montrées aux figures 1 et 2).

La paupière supérieure 6, en descendant lors du clignement, "bute" en quelque sorte contre la montée de la bosse, mais, bien sûr, sans qu'elle soit arrêtée ou bloquée dans cette montée. C'est cet effet de butée, c'est-à-dire de friction qui en découle, qui stabilise la lentille. D'une part, plus la montée de la bosse est raide (donc plus la pente et la hauteur sont importantes), plus l'action stabilisatrice de la paupière sur la bosse est efficace, comme cela a été dit plus haut. Mais d'autre part, le choix des grandeurs et de ses paramètres d'une bosse à pente raide est beaucoup plus délicat ou pointu - car faisant appel à une plus grande technicité - que celui d'une bosse à pente douce, l'influence stabilisatrice de ces grandeurs et paramètres étant (avec une pente allant grandissant) plus prononcée et se manifestant sur un trajet de la paupière supérieure plus court.

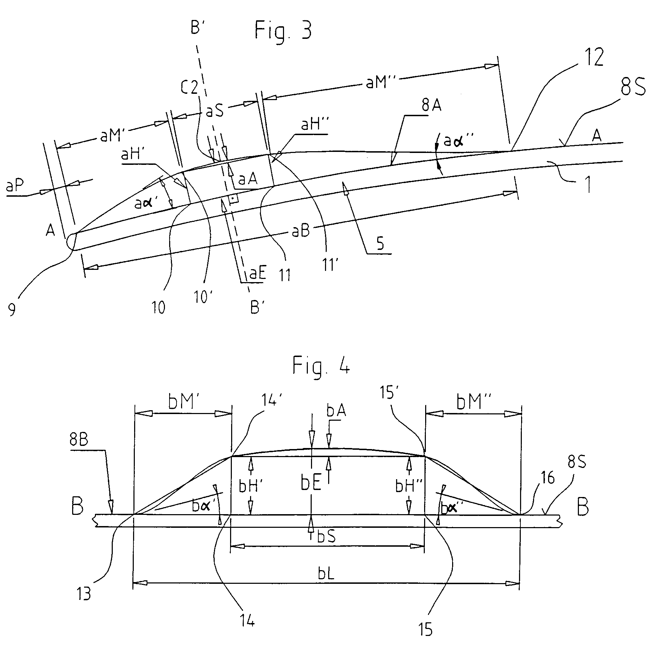

La détermination de la géométrie d'une bosse pour la mise en oeuvre du procédé va être expliquée ci-après à l'aide des figures 2 à 4. Cette détermination est originale en ce sens qu'elle porte soit sur un jeu (b) de grandeurs et paramètres et une courbe quelconque prédéfinie, soit sur deux jeux de grandeurs et paramètres (a), (b). Le jeu (a) de grandeurs et paramètres se réfère de préférence et essentiellement à une ligne courbe (ou base curviligne) 8A (voir figure 3), se trouvant dans un plan de coupe choisi, avantageusement, selon l'exemple décrit, dans un plan de coupe (A), perpendiculaire au plan (P) déterminé par le contour PL de la lentille et symbolisé à la figure 2 que par la trace A-A (le signe (A) n'est pas reproduit sur la figure). Vue en élévation à la figure 2, cette trace se confond avec la bissectrice d'un angle de sommet C1 et de côtés C1-13; C1-16, 13 et 16 étant les points d'amorce de la bosse à l'intersection d'une surface (B) définie plus loin et d'une ligne de base courbe 8B.

Le jeu (b) se réfère de préférence et essentiellement à la ligne courbe 8B précitée (qui est droite en projection développée selon la figure 4) se trouvant dans un autre "plan" de coupe choisi, avantageusement, selon l'exemple décrit, dans la surface de coupe (B) symbolisée par la trace B-B à la figure 2 et la trace B'-B' à la figure 3 (le signe (B) n'est pas reproduit dans ces figures). On comprend à l'appui des figures 2 et 3 que la surface (B) est perpendiculaire à la surface courbe externe 8S de la lentille de même que la ligne 8A est perpendiculaire à cette surface (B) en leur point d'intersection visible à la figure 3 (mais non référencé). La trace B-B est perpendiculaire à la trace A-A à leur point d'intersection; elle correspond, vue en élévation, à la ligne de crête de la bosse. En considérant des demi-plans imaginaires passant par le centre C1 de la lentille, perpendiculaires au plan (P), et "balayant" la bosse (par exemple la bosse 2) entre les points 13 et 16 le plan (A) constituant un cas particulier de ces demi-plans, la ligne de crête B-B est le lieu géométrique des points culminants de la bosse, chaque demi-plan imaginaire considéré contenant l'un de ces points. Si la projection dans le plan B de la ligne de crête B-B peut théoriquement être rectiligne, il va de soi que normalement, c'est-à-dire dans la quasi-totalité des cas, dans l'état actuel de la technique, cette projection sera un arc de cercle de centre confondu avec le centre C1 de la lentille (et la surface B sera courbe), puisque par usinage de la lentille sur un tour avec le dispositif d'usinage préférentiel décrit dans la demande de brevet européen no. 96810060.2, la bosse suit la forme circulaire de la lentille. Ainsi, de manière générale, la forme de la surface (B) sera dictée par la ligne de crête B-B.

Par ailleurs, on définit le centre d'une bosse comme étant le point d'intersection entre le plan (A) et la ligne de crête B-B (cf. fig. 2 et 3).

Le jeu (a) (voir essentiellement figure 3) comprend trois grandeurs, à savoir les montées ou pentes, le sommet et la position radiale de la bosse, chacune de ces grandeurs étant définie par au moins un paramètre. On peut y ajouter une grandeur alternative, la largeur de la bosse, selon la sélection des paramètres (voir plus loin). Bien entendu, l'homme du métier pourra intégrer dans le jeu (a) des données supplémentaires de son choix, à titre plus subsidiaire. On va à présent décrire en détail ces grandeurs et paramètres:

Les montées (ou pentes) M sont elles mêmes définies de préférence par les paramètres suivants:

- la cote des cordes aM', aM" sous-tendant des arcs $a\widehat{M}'$, $a\widehat{M}"$ de la courbe 8A, respectivement entre les points 9, 10 et 11, 12,
- les angles aα', aα" et
- les hauteurs aH' et aH".

Les cotes aM' et aM", respectivement du côté externe et interne de la lentille 1, peuvent, mais ne doivent pas nécessairement être égales entre elles; c'est dire que dans la relation ( aM" = $ak_l$ x aM' ), le facteur $k_l$ de proportionnalité peut être différent de 1.

aα', aα" est l'angle dont le sommet est le point de départ ou d'amorce 9 (du côté extérieur de la lentille), 12 (du côté intérieur de la lentille) de la montée aM', aM" par rapport à la ligne 8A, les branches de cet angle étant la tangente en ce point à la ligne 8A et la tangente à (ou la droite de) la montée aM en ce point (étant entendu que ladite montée peut être rectiligne ou courbe, avec ou sans point d'inflexion.

Les hauteurs aH', aH" sont mesurées sur une perpendiculaire à la tangente à la base 8A respectivement aux points 10, 11. Elles peuvent, mais ne doivent pas nécessairement être égales entre elles; il est avantageux de choisir le facteur de proportionnalité $ak_H$ les reliant dans l'équation ( aH' = $ak_H$ x aH" ou aH" = $ak_H$ . aH' ) dans un domaine de valeurs figurant dans le tableau ci-après.

Le sommet est défini par au moins un paramètre, de préférence l'arrondi, défini par la flèche aA.

Soulignons que le terme sommet ne se réduit pas nécessairement à un point mais doit être étendu à toute portion de ligne culminante comprise entre les montées telles que déterminées plus haut.

La zone ou portion de ligne culminante (dans la mesure où elle n'est pas réduite à un point), peut être plate, auquel cas sa courbure sera nulle, c'est-à-dire que l'on aura aA = 0, ou alors être bombée, auquel cas sa courbure (ou convexité) donnée par la flèche aA sera plus grande que zéro. Le terme flèche répond à la définition générale, à savoir la distance entre la corde (ici 10', 11') de l'arc de courbe qu'elle sous-tend et la tangente à cette courbe qu'on peut mener parallèlement à cette corde. Bien entendu, la convexité peut comprendre également une partie plate ou méplate.

La définition du sommet S peut faire intervenir un deuxième paramètre, la cote aS mesurée entre les points 10, 11 (ou, ce qui revient au même, entre les points 10' et 11'), cela dans la mesure où l'on ne considérerait pas la largeur aB, aB et aS n'étant pas indépendants l'un de l'autre. En effet, en partant de la définition des montées, aS se déduit de aB ou vice versa.

C'est la raison pour laquelle la largeur peut être qualifiée de grandeur alternative. Elle est définie par une corde de cote aB sous-tendant l'arc de la courbe 8A entre les points d'amorce 9, 12 des montées aM', aM".

La cote aS est avantageusement comprise entre 0 et 70 % de celle d'aB.

La position radiale de la base est définie par un segment de droite ou écart aP compris dans le plan (A), mesurant la distance entre le bord extérieur de la lentille et le point d'amorce 9 de la pente aM' (voir figure 2).

Comme nous l'avons dit plus haut, on peut également introduire dans le jeu (a) des paramètres supplémentaires, tel par exemple celui de l'épaisseur, définie par la cote aE qui correspond à la distance maximale entre la base 8A et le point culminant (ou l'un des points culminants d'un méplat) du sommet de la bosse.

A l'instar du jeu (a), le jeu (b) (voir essentiellement la figure 4) comprend trois grandeurs définis par leur(s) paramètre(s), soit les montées ou pentes, le sommet et la position axiale de la bosse. On peut y ajouter une grandeur alternative, la longueur de la bosse, selon la sélection de ces paramètres. Ces grandeurs et paramètres sont exposés en détail ci-après, étant entendu que l'homme du métier pourrait considérer des données supplémentaires de son choix.

Les montées (ou pentes) sont elles-mêmes définies de préférence par les paramètres suivants:

- la cote des cordes bM', bM" lue dans la surface de coupe (B) précitée et représentée en projection développée plane à la figure 4,
- les angles $b\alpha'$, $b\alpha"$ et
- les hauteurs bH' et bH".

Les cotes bM' et bM" peuvent, mais ne doivent pas nécessairement être égales entre elles; à l'inverse de ce que l'on a vu à l'appui de la figure 3, le coefficient de proportionnalité (ici $k_L$) liant ces deux longueurs est indifférent.

$b\alpha'$, $b\alpha"$ est l'angle dont le sommet est le point de départ ou d'amorce 13, 16 de la montée bM', bM" par rapport à la ligne 8B, les branches de cet angle étant la ligne 8B passant par ce point et la tangente à (ou la droite de) la montée bM', bM" en ce point, (étant entendu que ladite montée peut être rectiligne ou courbe, avec ou sans point d'inflexion.

Les hauteurs bH', bH" sont mesurées sur une perpendiculaire à la base 8B, respectivement aux points 14, 15. Elles peuvent, mais ne doivent pas nécessairement être égales entre elles; il est avantageux de choisir le facteur de proportionnalité $bk_H$ les reliant dans l'équation (bH' = $bk_H$ x bH" ou bH" = $bk_H$ x bH' ) dans un domaine de valeurs selon le tableau ci-après.

Le sommet est défini par au moins un paramètre, de préférence par l'arrondi, lequel est à son tour défini par la flèche bA.

Rappelons que le terme sommet ne se réduit pas nécessairement à un point mais doit être entendu à toute portion de ligne culminante comprise entre les montées telles que déterminées plus haut.

On se reportera, pour ce qui concerne la notion de position de ligne culminante et de flèche, à l'exposé ci-dessus à propos du jeu (a), pour le reprendre ici mutatis mutandis.

Là aussi la définition du sommet peut faire intervenir un deuxième paramètre, la cote bS mesurée entre les points 14, 15 (ou, ce qui revient au même, entre les points 14' et 15'), cela dans la mesure où l'on ne considérerait pas la largeur bL, bL et bS n'étant pas indépendants l'un de l'autre. En effet, en partant de la définition des montées, bS se déduit de bL ou vice versa.

C'est la raison pour laquelle la longueur peut être qualifiée de grandeur alternative. Elle est définie par bL (ligne courbe 8B développée) dans le plan (B) entre les points d'amorce 13, 16 des montées bM', bM".

La cote bS est avantageusement comprise entre 0 et 70 % de celle de bL.

Enfin, la position axiale de la bosse ou le décalage est défini(e) par un écart bD, vue en élévation selon la figure 2, entre l'axe de stabilisation S-S et le diamètre D-D de la lentille.

On peut prévoir dans le jeu (b) également des paramètres supplémentaires, avantageusement en pratique, par exemple celui de l'épaisseur définie par la cote bE qui correspond à la distance maximale entre la base 8B et le point culminant (ou l'un des points de la portion de ligne culminante d'un méplat) du sommet de la bosse (c'est-à-dire la distance entre la ligne 8B et la tangente au sommet, parallèle à 8B).

Les grandeurs et paramètres de détermination d'un bossage et des exemples de valeurs ou intervalles de valeurs préférentielles découlant de nombreuses expériences sont indiqués dans le tableau ci-après, observation étant faite que les valeurs peuvent être spécifiées chaque fois individuellement, c'est-à-dire en fonction des caractéristiques particulières de l'oeil d'un porteur, avantageusement par application du procédé d'élaboration d'une lentille décrit dans la demande EP-95810181.8.

| PARAMETRES ET EXEMPLES DE VALEURS (en mm; °) | | | | |
|---|---|---|---|---|
| Désignation / Définition | jeu (a) | | jeu (b) | |
| | selon le plan (A) | Relation | selon la surface (B) | Relation |
| * Montée ou pente M | | | | |
| • cote des cordes M | aM', aM'' | aM'' =ak$_l$ x aM' | bM', bM'' | bM'' = bk$_L$ x bM' |
| | aM' ⊂ [0,8;3,5] | ak$_l$ ⊂ [0,2;5] | bM' ⊂ [1;5] | bk$_L$ ⊂ [0,2;5] |
| | aM'' ⊂ [0,8;3,5] | | bM'' ⊂ [1;5] | |
| • angle α | aα' , aα'' | | bα' , bα'' | |
| | aα' ⊂ [0;30] | | bα' ⊂ [0;45] | |
| | aα'' ⊂ [0;30] | | bα'' ⊂ [0;45] | |
| • hauteurs H | aH' , aH'' | aH'=ak$_H$ x aH'' | bH', bH'' | bH' = bk$_H$ x bH'' |
| | aH' ⊂ [0,1;0,3] | ak$_H$⊂[0,6;1,5] | bH' ⊂ [0,1;0,3] | bk$_H$ ⊂ [0,6;1,5] |
| | aH'' ⊂ [0,1;0,3] | | bH'' ⊂ [0,1;0,3] | |
| * Sommet S | | | | |
| • arrondi A | aA | 0 ≤ aS ≤ 2.0 | bA | |
| | aA ⊂ [0;0,15] | | bA ⊂ [0;0,15] | |
| • cote corde | aS | | bS | |
| | aS ⊂ | | bS ⊂ [0;8] | |
| * Positionnement | | | | |
| • Radial | aP | | | |
| | aP ⊂ [0;1] | | | |
| • Axial/Décalage | | | bD | |
| | | | bD ⊂ [0;5] | |
| * Largeur B | aB | | | |
| | aB ⊂ [2;5] | | | |
| * Longueur L | | | bL | |
| | | | bL ⊂ [3;12] | |
| • Epaisseur E | aE | | bE | |
| | aE ⊂ [0,1;0,3] | aH'' ≤ aE ≤ aH' | bE ⊂ [0,1;0,3] | |

Finalement, vue en élévation, la bosse est encore caractérisée par la forme qu'elle présente à la base, c'est-à-dire par son contour F découlant des liaisons successives des points d'amorce des montées entre eux (voir figure 2). Sur la figure 2 sont représentés des exemples de formes possibles F1, F2, F3, F4, F5.

Les grandeurs et paramètres sélectionnés et les valeurs choisies peuvent être digitalisés pour permettre une fabrication automatisée de la lentille.

Le procédé selon l'invention présente des avantages très appréciables grâce aux faits que la géométrie de la bosse stabilisatrice est définie avec un minimum de paramètres, que surtout, ces paramètres sont véritablement et objectivement adaptés - et aisément programmables - aux dispositifs de fabrication de lentilles les plus modernes, notamment à celui décrit dans la demande EP-96810060.2.

## Revendications

1. Procédé de fabrication d'une lentille de contact à correction axée comportant au moins une bosse de stabilisation, caractérisé en ce que le dispositif d'élaboration choisi façonne la bosse selon, d'une part, un jeu (a) de grandeurs se référant à une base (8A) de la bosse et à un plan de coupe (A) et, d'autre part, un jeu (b) de grandeurs se référant à une base (8B) de la bosse et à une surface de coupe (B), le plan (A) étant un plan qui passe par le centre (C1) de la lentille et le centre (C2, C3) de la bosse et qui est perpendiculaire à un plan (P) déterminé par le contour (PL) de la lentille, le plan (A) contenant la base (8A), la surface (B) étant une surface qui passe par la ligne de crête (B-B) de la bosse et qui est perpendiculaire à la surface extérieure (8S) de la lentille, la surface (B) contenant la base (8B).

2. Procédé de fabrication d'une lentille de contact à correction axée comportant au moins une bosse de stabilisation, caractérisé en ce que le dispositif d'élaboration choisi façonne la bosse selon, d'une part, un jeu (b) de grandeurs se référant à une base (8B) de la bosse et à une surface de coupe (B), cette dernière étant une surface qui passe par la ligne de crête (B-B) de la bosse et qui est perpendiculaire à la surface extérieure (8S) de la lentille, la surface (B) contenant la base (8B) et, d'autre part, une courbe quelconque prédéfinie dans le plan (A) et pouvant être reproduite par digitalisation, le plan (A) étant un plan qui passe par le centre (C1) de la lentille et le centre (C2, C3) de la bosse et qui est perpendiculaire à un plan (P) déterminé par le contour (PL) de la lentille.

3. Procédé selon la revendication 1, caractérisé en ce que le jeu (a) comprend trois grandeurs, à savoir les pentes, le sommet et la position radiale, chacune de ces grandeurs étant définie par au moins un paramètre.

4. Procédé selon la revendication 3, caractérisé en ce que le jeu (a) peut comprendre une quatrième grandeur, qui est la largeur de la bosse.

5. Procédé selon la revendication 3 ou 4, caractérisé en ce que les paramètres de définition des pentes sont des cotes (aM', aM''), des angles de pente respectifs (a$\alpha$', a$\alpha$'') aux points d'amorce (9, 12) et des hauteurs (aH', aH'').

6. Procédé selon la revendication 3, 4 ou 5, caractérisé en ce que le paramètre de définition du sommet est une flèche (aA).

7. Procédé selon la revendication 6, caractérisé en ce que la définition du sommet peut comprendre un paramètre supplémentaire, soit la cote d'une corde (aS).

8. Procédé selon la revendication 6 ou 7, caractérisé en ce que la définition du sommet peut comprendre un autre paramètre supplémentaire, soit l'épaisseur (aE) de la bosse correspondant à la distance maximale entre la base (8A) et le point culminant du sommet de la bosse, ou l'un de ces points si le sommet présente un méplat.

9. Procédé selon l'une des revendications 3 à 8, caractérisé en ce que la définition de la position radiale est la distance (aP) dans le plan (A), entre le bord de la lentille et le point (9) d'amorce de la pente (aM').

10. Procédé selon l'une des revendications 4 à 9, caractérisé en ce que la largeur de la bosse est définie par une corde (aB) sous-tendant l'arc de la courbe (8A) entre les points d'amorce de pentes (9, 12).

11. Procédé selon l'une des revendications 5 à 10, caractérisé en ce que les cotes (aM', aM'') sont comprises dans un domaine de valeurs de 0,8 à 3,5 mm et reliées entre elles par un coefficient $k_l$ = (aM'')/(aM') de préférence compris dans un domaine de valeurs de 0,2 à 5.

12. Procédé selon l'une des revendications 5 à 11, caractérisé en ce que les angles de pente (a$\alpha$', a$\alpha$'') aux points d'amorce (9, 12) sont compris dans un domaine de valeurs entre 0° et 30°.

**13.** Procédé selon l'une des revendications 5 à 12, caractérisé en ce que les hauteurs (aH', aH'') sont comprises dans un domaine de valeurs 0,1 à 0,3 mm et reliées encre elles par un coefficient de proportionnalité $ak_H$, de préférence compris dans un domaine à valeurs de 0,6 a 1,5.

**14.** Procédé selon l'une des revendications 6 à 13, caractérisé en ce que la flèche (aA) est comprise dans un domaine de valeurs entre 0 et 0,15 mm.

**15.** Procédé selon l'une des revendications 7 à 14, caractérisé en ce que la cote de la corde (aS) sous-tendant le sommet de la bosse est comprise dans un domaine de valeurs entre 0 et 2 mm.

**16.** Procédé selon l'une des revendications 8 à 15, caractérisé en ce que l'épaisseur (aE) est comprise entre 0,1 et 0,3 mm.

**17.** Procédé selon l'une des revendications 9 à 16, caractérisé en ce que la valeur de la position radiale (aP) est comprise dans un domaine de valeurs entre 0 et 1 mm.

**18.** Procédé selon l'une des revendications 7 à 17, caractérisé en ce que la corde (aS) du sommet de la bosse est comprise entre 0 et 70 % de la largeur (aB).

**19.** Procédé selon la revendication 2 ou l'une des revendications 1 à 18, caractérisé en ce que le jeu (b) comprend trois grandeurs, à savoir les pentes, le sommet et la position axiale ou décalage, chacune de ces grandeurs étant définie par au moins un paramètre.

**20.** Procédé selon la revendication 19, caractérisé en ce que le jeu (b) peut comprendre une quatrième grandeur, qui est la longueur (bL) de la bosse.

**21.** Procédé selon la revendication 19 ou 20, caractérisé en ce que les paramètres de définition des pentes sont des cotes (bM', bM''), des angles de pente respectifs (b$\alpha$', b$\alpha$'') aux points d'amorce (13, 16) et des hauteurs (bH', bH'').

**22.** Procédé selon la revendication 19, 20 ou 21, caractérisé en ce que le paramètre de définition du sommet est une flèche (bA).

**23.** Procédé selon la revendication 22, caractérisé en ce que la définition du sommet peut comprendre un paramètre supplémentaire, soit la cote d'une corde (bS).

**24.** Procédé selon la revendication 22 ou 23, caractérisé en ce que la définition du sommet peut comprendre un autre paramètre supplémentaire, soit l'épaisseur (bE) de la bosse correspondant à la distance maximale entre la base (8B) et le point culminant du sommet de la bosse, ou l'un de ces points si le sommet présente un méplat.

**25.** Procédé selon l'une des revendications 19 à 24, caractérisé en ce que la définition de la position radiale ou décalage (bD) est la distance entre un axe de stabilisation (S-S) passant par le centre (C2, C3) de la bosse et un diamètre (D-D) de la lentille parallèle audit axe (S-S).

**26.** Procédé selon l'une des revendications 19 à 25, caractérisé en ce que la longueur de la bosse est définie par la cote d'une ligne (bL) dans le plan (B) entre les points d'amorce de pointes (13, 16).

**27.** Procédé selon l'une des revendications 21 à 26, caractérisé en ce que les cotes (bM', bM'') sont comprises dans un domaine de valeurs de 0,8 à 3,5 mm et reliées entre elles par un coefficient $k_L = (bM'')/(bM')$ de préférence compris dans un domaine de valeurs de 0,2 à 5.

**28.** Procédé selon l'une des revendications 21 à 27, caractérisé en ce que les angles de pente (b$\alpha$', b$\alpha$'') aux points d'amorce (13, 16) sont compris dans un domaine de valeurs entre 0° et 30°.

**29.** Procédé selon l'une des revendications 21 à 28, caractérisé en ce que les hauteurs (bH', bH'') sont comprises dans un domaine de valeurs 0,1 à 0,3 mm et reliées entre elles par un coefficient de proportionnalité $bk_H$, de préférence compris dans un domaine à valeurs de 0,6 à 1,5.

**30.** Procédé selon l'une des revendications 22 à 29, caractérisé en ce que la flèche (bA) est comprise dans un domaine de valeurs entre 0 et 0,15 mm.

31. Procédé selon l'une des revendications 23 à 30, caractérisé en ce que la cote de la corde (bS) sous-tendant le sommet de la bosse est comprise dans un domaine de valeurs entre 0 et 2 mm.

32. Procédé selon l'une des revendications 24 à 31, caractérisé en ce que l'épaisseur (bE) est comprise entre 0,1 et 0,3 mm.

33. Procédé selon l'une des revendications 25 à 32, caractérisé en ce que la position axiale (bD) est compris dans un domaine de valeurs entre 0 et 5 mm.

34. Procédé selon l'une des revendications 23 à 33, caractérisé en ce que la corde (aS) du sommet de la bosse est comprise entre 0 et 70 % de la longueur (bL).

35. Procédé selon l'une des revendications 1 à 34, caractérisé en ce que la bosse présente, vue en élévation, une forme de contour (F), ce contour étant de préférence oblong.

36. Procédé selon l'une des revendications 1 à 35, caractérisé en ce que le dispositif de fabrication est commandé par un système de traitement des données auquel sont fournis les paramètres et valeurs respectives.

37. Lentille de contact stabilisée en rotation pourvue d'au moins une bosse dont la fabrication d'une bosse met en oeuvre le procédé selon la revendication 1 ou 2 ou selon l'une des revendications 3 à 10 ou 19 à 26.

38. Lentille selon la revendication 37, fabriquée avec les données de l'une ou l'autre des revendications 11 à 18 ou 27 à 34.

Fig. 1

Fig. 2

Fig. 3

Fig. 4

Office européen
des brevets

**RAPPORT DE RECHERCHE EUROPEENNE**

Numéro de la demande

EP 97 81 0438

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 042 023 A (BIOLENS SA)<br>* abrégé *<br>* page 3, ligne 15 - ligne 21 *<br>--- | 1 | G02C7/04 |
| D,A | EP 0 732 639 A (MULLER GERARD)<br>* abrégé *<br>--- | 1,36 | |
| A | EP 0 452 549 A (HEINRICH WOEHLK INST FUER CONT)<br>* colonne 6, ligne 16 - colonne 7, ligne 48 *<br>--- | 1 | |
| A | WO 89 07303 A (NEWMAN STEVE ;NOACK DON (AU))<br>* page 6, ligne 12 - ligne 38; figure 7 *<br>--- | 1 | |
| A | WO 84 04724 A (INT HYDRON CORP)<br>* abrégé *<br>----- | 1 | |

**DOMAINES TECHNIQUES RECHERCHES (Int.Cl.6)**

G02C

Le présent rapport a été établi pour toutes les revendications

| Lieu de la recherche | Date d'achèvement de la recherche | Examinateur |
|---|---|---|
| LA HAYE | 4 décembre 1997 | CALLEWAERT, H |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)